# EUROPÄISCHE PATENTSCHRIFT

(11) **EP 2 860 147 B1**
(45) Veröffentlichungstag und Bekanntmachung des Hinweises auf die Patenterteilung: **01.06.2016**
(21) Anmeldenummer: 14188133.4
(22) Anmeldetag: 08.10.2014
(51) Int. Cl.: B66C 23/78, B60S 9/02, E02F 9/08

(54) **Stützvorrichtung für ein mobiles Arbeitsgerät**
Support device for a mobile piece of equipment
Dispositif de support pour un appareil de travail mobile

(30) Priorität: 09.10.2013 DE 102013220334
(43) Veröffentlichungstag der Anmeldung: 15.04.2015
(73) Patentinhaber: Putzmeister Engineering GmbH, 72631 Aichtal (DE)
(72) Erfinder: Stegmeier, Benjamin, 72829 Engstingen (DE)
(74) Vertreter: Pfiz, Thomas

(56) Entgegenhaltungen:
- WO-A1-2013/014608
- CH-A5- 682 093
- CN-U- 201 998 962
- DE-A1-102008 058 937

## Beschreibung

Die Erfindung betrifft eine Stützvorrichtung für ein mobiles Arbeitsgerät, insbesondere Autobetonpumpe, mit einem vorzugsweise mit einem Teleskopglied versehenen Stützbein und einem an einer unteren Gelenkstelle des Stützbeins allseitig begrenzt schwenkbaren, auf einem Untergrund abstützbaren Pendelfuß, wobei die Gelenkstelle eine Lagerpfanne und einen durch lösbare Verbindungsmittel in der Lagerpfanne gesicherten Kugelkopf aufweist. Die Erfindung betrifft weiter ein mobiles Arbeitsgerät mit mindestens einer solchen Stützvorrichtung.

Bei bekannten Stützvorrichtungen dieser Art nimmt der Pendelfuß das Kugelkopfende das Stützbein mit geringem Spalt auf, wobei zur Verbindung metallische Ringsegmente vorgesehen sind, die als Sicherungsring zusammensetzbar sind und am metallischen Kugelkopf halten. Problematisch dabei ist, dass durch die Reibung von Metall auf Metall die Oberfläche des Kugelkopfs beschädigt werden kann. Außerdem erfüllen die metallischen Ringsegmente keinerlei Dichtfunktion, so dass Schmutz oder aggressive Substanzen in den Lagerbereich eindringen können, was zu Rostbildung und im Extremfall zu einem Lagerschaden und einem erforderlichen Austausch des Kugelkopfträgers führen kann. Ein weiterer Nachteil liegt darin, dass das Überschreiten eines Grenzwinkels beim Pendeln Beschädigungen zur Folge hat.

DE 10 2008 058937 A1 (PUTZMEISTER CONCRETE PUMPS [DE]) offenbart eine Stützvorrichtung nach dem Oberbegriff des Anspruchs 1.

Ausgehend hiervon liegt der Erfindung die Aufgabe zugrunde, die im Stand der Technik bekannten Stützvorrichtungen weiter zu verbessern und eine möglichst hohe Standzeit bei Erhaltung einer guten Funktionsfähigkeit zu erreichen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine schwenkbewegliche und beschädigungssichere Kugelkopfverbindung zu erhalten und zusätzlich noch eine Abdichtfunktion zu erreichen. Dementsprechend wird erfindungsgemäß vorgeschlagen, dass die Verbindungsmittel einen den Kugelkopf dichtend und geschlossen umgreifenden elastomeren Dichtring und eine den Dichtring am Rand der Lagerpfanne fixierenden und ringförmig gegen den Kugelkopf spannende Sicherung bevorzugt in Form eines Sicherungsrings umfassen. Der Dichtring liegt somit spaltfrei an der Oberfläche des Kugelkopfs an. Dadurch wird eine zuverlässige Abdichtfunktion und insbesondere ein Korrosionsschutz erreicht, wobei durch die Gleitfähigkeit des elastomeren Dichtrings sichergestellt wird, dass die Pendelfunktion erhalten bleibt. Zugleich wird eine hohe Montage- und Wartungsfreundlichkeit und einfache Auswechselbarkeit bei geringen Herstellungskosten erzielt. Besonders vorteilhaft ist auch, dass die Verbindungsmittel auch an herkömmlichen Pendelplatten einsetzbar sind.

Vorteilhafterweise ist der Dichtring unter elastischer Aufweitung über eine freie Halbkugel des Kugelkopfs überziehbar und im Bereich eines Kleinkreises des Kugelkopfs aufspannbar, so dass eine hinreichende Pendelstabilität bei gleichzeitig hoher Dichtwirkung erreicht wird.

Eine weitere vorteilhafte Ausführung sieht vor, dass der Dichtring an seiner an dem Kugelkopf anliegenden Dichtfläche eine in Form einer Kugelzone gekrümmte Kontur aufweist, wodurch eine flächige Anpressung möglich ist.

Eine weitere Verbesserung in dieser Richtung lässt sich dadurch erreichen, dass der Dichtring für eine Presspassung an den Kugelkopf angepasst ist, wobei der Dichtring in der Einbauposition ein radiales Untermaß gegenüber dem Kugelkopf besitzt.

Um eine hinreichende Elastizität und Gleitfähigkeit sicherzustellen, ist es von Vorteil, wenn der Dichtring aus einem Elastomermaterial vorzugsweise PU mit einer Härte im Bereich von 80 bis 90 Shore-A besteht.

Für eine radiale und axiale Sicherung ist es vorteilhaft, wenn der Dichtring einen abgestuften Flanschbereich zur formschlüssigen Aufnahme der Sicherung aufweist.

Für eine einfache Montage an einem oberen Kugelkopfabschnitt ist es günstig, wenn die als Sicherungsring ausgebildete Sicherung aus starren Ringsegmenten mehrteilig, insbesondere zweiteilig zusammengesetzt ist.

Für eine sichere und dauerhafte Fixierung des Kugelkopfs in der Lagerschale ist es von Vorteil, wenn die ringförmige Sicherung im Einbauzustand einen gegenüber dem Großkreisdurchmesser des Kugelkopfs kleineren Innendurchmesser besitzt.

Zur dauerhaften Aufnahme hoher Belastungen ist es günstig, wenn die Sicherung bzw. der Sicherungsring aus Metall, insbesondere aus Stahl bzw. Edelstahl besteht.

Eine weitere vorteilhafte Ausführung sieht vor, dass die Verbindungsmittel mehrere über den Umfang des Sicherungsrings verteilte Sicherungsschrauben aufweisen, und dass die Sicherungsschrauben durch miteinander fluchtende Durchbrüche des Sicherungsrings und des Dichtring hindurch in Sacklochbohrungen in der Randpartie der Lagerpfanne einschraubbar sind.

Von Vorteil ist es auch, wenn die Ringsegmente des Sicherungsrings mit ihren gegeneinander anliegenden Enden paarweise jeweils einen Durchbruch für eine Sicherungsschraube gemeinsam begrenzen. Auf diese Weise können die Segmentenden zuverlässig fixiert werden, so dass ein Aufbiegen der Segmente vermieden wird.

Eine weitere Montageverbesserung lässt sich dadurch erreichen, dass die Verbindungsmittel mehrere über den Umfang des Dichtrings verteilte Distanzhülsen zur Aufnahme jeweils einer Sicherungsschraube aufweisen, wobei die Distanzhülsen über einen Bund an der Sicherung abstützt sind und im axial unverspannten Zustand des Dichtrings in einem vorgegebenen Abstand vom Rand der Lagerpfanne enden. Auf diese Weise kann eine definierte axiale Vorspannung des Dichtrings erreicht werden, sobald die Distanzhülsen bei der Schraubfixierung an dem Rand der Lagerpfanne anstoßen. Damit wird auch vermieden, dass der Dichtring durch übermäßige Anpressung beim Montieren zerdrückt bzw. zerstört wird.

Auch im Sinne einer einfachen Fertigung ist es von Vorteil, wenn die Lagerpfanne einen kugelkalottenförmigen Abschnitt und einen im Durchmesser größeren Zylinderabschnitt aufweist.

Bei dem bauartbedingt bis zu einem Grenz-Schwenkwinkel schwenkbeweglichen Pendelfuß schützt der durch die Sicherung vorgespannte elastomere Dichtring die Gelenkstelle im Grenzbereich des Schwenkwinkels vor Beschädigung.

Gegenstand der Erfindung ist auch ein mobiles Arbeitsgerät, insbesondere Autobetonpumpe, mit einem Fahrgestell und mindestens einer an dem Fahrgestell vorzugsweise an einem Ausleger angeordneten erfindungsgemäßen Stützvorrichtung.

Im Folgenden wird die Erfindung anhand des in der Zeichnung schematisch dargestellten Ausführungsbeispiels näher erläutert. Es zeigen:
- Fig. 1: eine Autobetonpumpe mit einer ausfahrbaren Stützvorrichtung in Seitenansicht;
- Fig. 2: ein Stützbein in Verbindung mit einem Pendelfuß der Stützvorrichtung in einem abgebrochenen Axialschnitt;
- Fig. 3: einen Dichtring des Pendelfußes in der Draufsicht;
- Fig. 4: einen Schnitt entlang der Linie 4 - 4 der Fig. 3;
- Fig. 5: einen zusammensetzbaren Sicherungsring des Pendelfußes,
- Fig. 6: eine weitere Ausführungsform eines Sicherungsrings; und
- Fig. 7: eine weitere Ausführungsform eines Pendelfußes in einem ausschnittsweisen Axialschnitt.

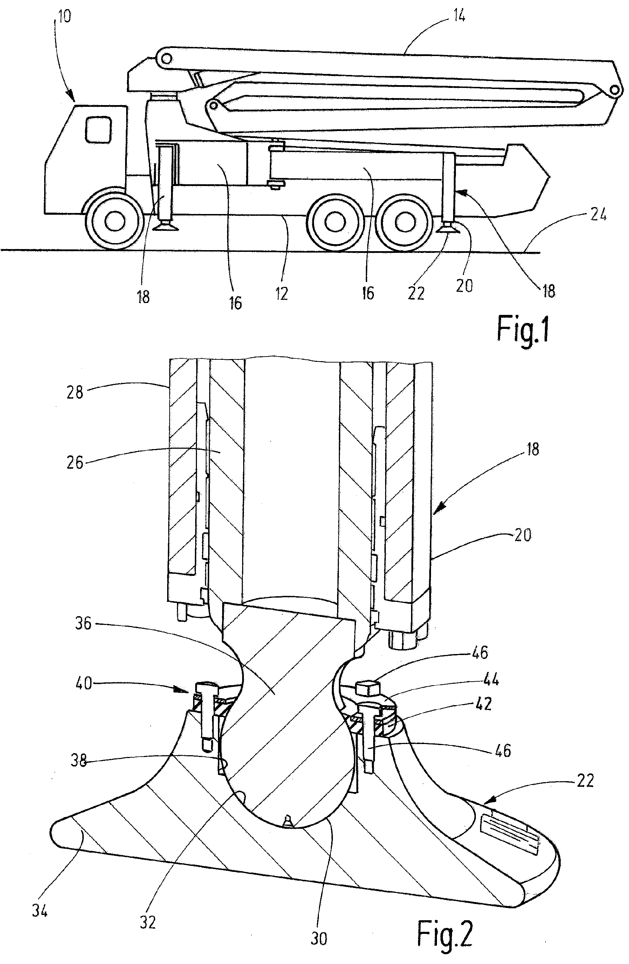

Die in Fig. 1 im Fahrzustand dargestellte mobile Autobetonpumpe 10 umfasst ein Fahrgestell 12, einen darauf gelagerten Betonverteilermast 14 und vier an jeweils einem seitlich ausstellbaren Ausleger 16 angeordnete Stützvorrichtungen 18, die jeweils ein vertikal teleskopierbares Stützbein 20 und einen daran angelenkten Pendelfuß 22 zur Abstützung auf einem ggf. unebenen Untergrund 24 umfassen. In der von der Fahrzeuglängsachse weiter entfernten Abstützstellung spannen die vier bodenseitig aufstehenden Pendelfüße ein Viereck auf und gewähren damit die notwendige Standsicherheit beim Entfalten des Betonverteilermasts 14.

Wie am besten auf Fig. 2 ersichtlich, besitzt jedes Stützbein 18 ein nach unten ausfahrbares Teleskopglied 26, das durch die hohle Kolbenstange einer hydraulischen Zylinder-/Kolbeneinheit 28 gebildet ist. Zur gelenkigen Verbindung des Pendelfußes 22 ist ein am freien Ende des Teleskopglieds 26 starr befestigter Kugelkopf 30 in einer Lagerpfanne 32 gelagert, die in einer Stützplatte 34 des Pendelfußes 22 eingeformt ist. Während der Kugelkopf 30 einen über eine untere Halbkugel hinausgehenden oberen Kugelabschnitt 36 aufweist, umfasst die Lagerpfanne 32 einen unteren kugelkalottenförmigen Abschnitt und einen im Durchmesser größeren oberen Zylinderabschnitt 38, der eine Einführöffnung für den Kugelkopf 30 begrenzt.

Zur lösbare Sicherung der Kugelkopfverbindung sind Verbindungsmittel 40 vorgesehen, die einen elastomeren Dichtring 42, einen mehrteiligen Sicherungsring 44 und Sicherungsschrauben 46 umfassen. Damit wird im Einbauzustand eine zuverlässige Halterung des Pendelfußes 22 an dem Teleskopglied 26 sichergestellt, wobei eine allseitig begrenzte Schwenkbewegung der Stützplatte 34 erhalten bleibt, so dass diese sich selbsttätig an die Neigung des Untergrundes 24 anpasst und im Fahrzustand zur Einhaltung der maximalen Fahrzeugbreite anklappbar ist.

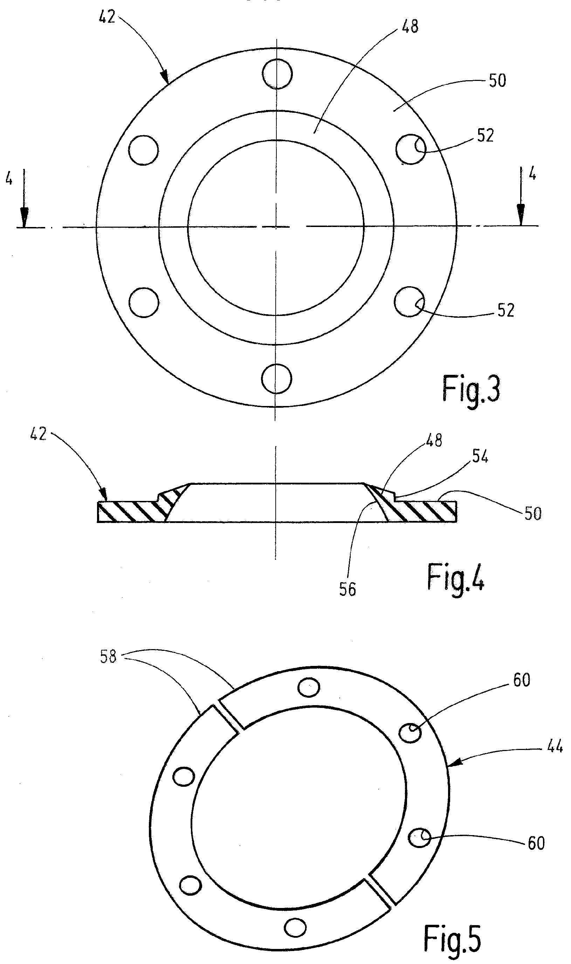

Wie in Fig. 3 und 4 gezeigt, ist der als abgestufte Scheibe ausgebildete Dichtring 42 umlaufend geschlossen. Er besteht aus einem gummielastisch dehnbaren Elastomermaterial, zweckmäßig Polyurethan (PU) oder Nitrilkautschuk (NBR) mit einer Härte von etwa 95 Shore-A. Ein innerer Dichtabschnitt 48 des Dichtrings 42 besitzt eine größere Dicke als ein äußerer Flanschabschnitt 50. In letzterem sind über den Umfang verteilt Durchbrüche 52 für den Durchgriff der Sicherungsschrauben 46 ausgebildet. Aufgrund der Abstufung 54 kann der Sicherungsring 44 formschlüssig angesetzt werden, so dass auch eine radiale Einspannung erzielt wird.

Um eine möglichst gute Abdichtung an dem Kugelkopf 30 zu erreichen, besitzt der innere Dichtabschnitt 48 eine axial gekrümmte innere Dichtfläche 56, welche die Kontur einer Kugelzone aufweist. Geometrisch wird als Kugelzone der gekrümmte Teil der Oberfläche einer Kugelschicht bezeichnet, wobei zwei parallele Ebenen aus einer Kugel eine Kugelschicht herausschneiden.

Der in Fig. 5 gezeigte Sicherungsring 44 ist aus zwei starren Ringhälften 58 als mittig geteilte Ringscheibe zusammengesetzt. Er besteht aus Stahl, insbesondere Edelstahl und weist Durchbrüche 60 auf, die im Einbauzustand mit den Durchbrüchen 52 des Sicherungsrings 42 fluchten, so dass die Sicherungsschrauben 46 mit ihrem Gewindeschaft in Sacklochbohrungen der Stützplatte 34 einschraubbar sind.

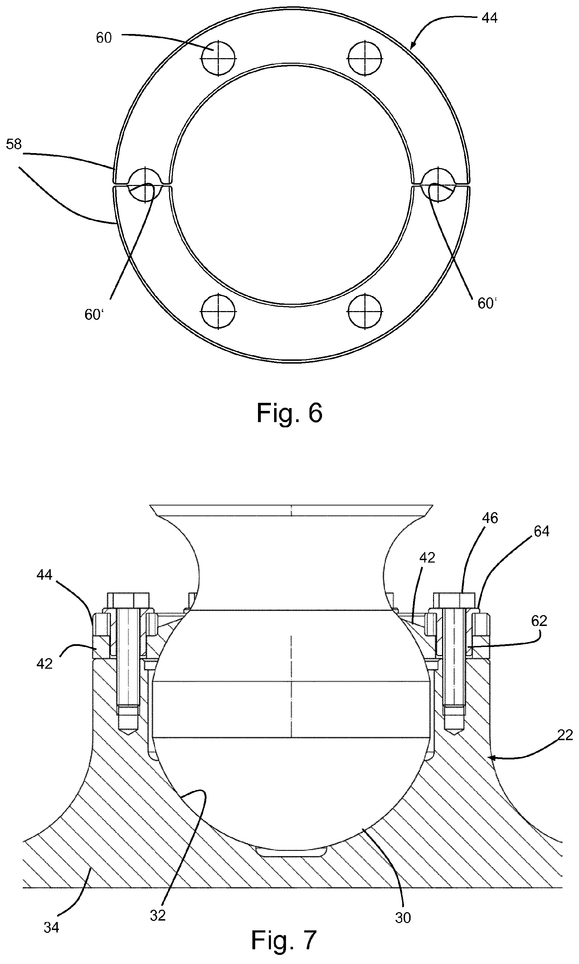

Fig. 6 zeigt eine weitere Ausführungsform eines zweiteiligen Sicherungsrings 44, bei dem der Lochkreis der Durchbrüche 60 gegenüber dem Beispiel nach Fig. 5 verdreht ist, so dass die Ringsegmente bzw. Halbringe 58 mit ihren gegeneinander anliegenden Enden paarweise jeweils einen Durchbruch 60' für eine Sicherungsschraube 46 gemeinsam begrenzen. Dadurch werden die Enden der Halbringe 58 durch die Schraubköpfe fixiert, womit ein Aufbiegen vermieden wird.

In der Ausführungsform nach Fig. 7 sind die Sicherungsschrauben 46 in Distanzhülsen 62 aufgenommen. Diese sind über einen Bund 64 an dem Sicherungsring 44 abgestützt. Die Länge der Distanzhülsen 62 ist so bemessen, dass sie im unverspannten Zustand des Dichtrings 42, als bei noch nicht angezogenen Sicherungsschrauben 46, einen vorgegebenen Abstand zum Rand der Lagerpfanne 32 einhalten. Beim Abziehen der Sicherungsschrauben 46 wird dann eine Anschlagstellung der Distanzhülsen 62 am horizontalen Begrenzungsrand der Lagerpfanne 32 erreicht, so dass der Dichtring unter definierter axialer Vorspannung steht und nicht zerdrückt bzw. zerstört wird.

Für die Montage lässt sich der Dichtring 42 unter elastischer Aufweitung über die freie Halbkugel des Kugelkopfs 30 überziehen und in dem oberen Kugelabschnitt 36 aufspannen. Dabei besitzt der Dichtring 42 ein radiales Untermaß bzw. einen etwas kleineren Innendurchmesser als der Kleinkreis des Kugelabschnitts 36 im Bereich der vorgesehenen Einbauposition, wodurch eine dicht abschließende Presspassung erzielt wird. Der durch die Schraubköpfe der Sicherungsschrauben 46 abgestützte Sicherungsring 44 weist einen gegenüber dem Großkreisdurchmesser des Kugelkopfs 30 kleineren Innendurchmesser auf, so dass Herausrutschen des Kugelkopfes auch bei hoher Belastung nicht bzw. nur unter Zerstörung des Sicherungsrings 44 möglich ist.

## Patentansprüche

1. Stützvorrichtung für ein mobiles Arbeitsgerät, insbesondere Autobetonpumpe (10), mit einem vorzugsweise mit einem Teleskopglied (26) versehenen Stützbein (20) und einem an einer unteren Gelenkstelle des Stützbeins (20) allseitig begrenzt schwenkbaren, auf einem Untergrund (24) abstützbaren Pendelfuß (22), wobei die Gelenkstelle eine Lagerpfanne (32) und einen durch Verbindungsmittel (40) in der Lagerpfanne (32) gesicherten Kugelkopf (30) aufweist, **dadurch gekennzeichnet, dass** die Verbindungsmittel (40) einen den Kugelkopf (30) dichtend umgreifenden elastomeren Dichtring (42) und eine den Dichtring (42) am Rand der Lagerpfanne (32) fixierende und gegen den Kugelkopf (30) spannende Sicherung (44) umfassen.

2. Stützvorrichtung nach Anspruch 1, **dadurch gekennzeichnet, dass** der Dichtring (42) unter elastischer Aufweitung über eine freie Halbkugel des Kugelkopfs (30) überziehbar und im Bereich eines Kleinkreises des Kugelkopfs (30) aufspannbar ist.

3. Stützvorrichtung nach Anspruch 1 oder 2, **dadurch gekennzeichnet, dass** der Dichtring (42) an seiner an dem Kugelkopf (30) anliegenden Dichtfläche (56) eine in Form einer Kugelzone gekrümmte Kontur aufweist.

4. Stützvorrichtung nach einem der Ansprüche 1 bis 3, **dadurch gekennzeichnet, dass** der Dichtring (42) für eine Presspassung an den Kugelkopf (30) angepasst ist, wobei der Dichtring (42) in der Einbauposition ein radiales Untermaß gegenüber dem Kugelkopf (30) besitzt.

5. Stützvorrichtung nach einem der Ansprüche 1 bis 4, **dadurch gekennzeichnet, dass** der Dichtring (42) aus einem Elastomermaterial vorzugsweise PU mit einer Härte im Bereich von 80 bis 90 Shore-A besteht.

6. Stützvorrichtung nach einem der Ansprüche 1 bis 5, **dadurch gekennzeichnet, dass** der Dichtring (42) einen abgestuften Flanschbereich (54) zur formschlüssigen Aufnahme der Sicherung (44) aufweist.

7. Stützvorrichtung nach einem der Ansprüche 1 bis 6, **dadurch gekennzeichnet, dass** die als Sicherungsring ausgebildete Sicherung (44) aus starren Ringsegmenten (58) mehrteilig, insbesondere zweiteilig zusammengesetzt ist.

8. Stützvorrichtung nach einem der Ansprüche 1 bis 7, **dadurch gekennzeichnet, dass** die ringförmige Sicherung (44) im Einbauzustand einen gegenüber dem Großkreisdurchmesser des Kugelkopfs (30) kleineren Innendurchmesser besitzt.

9. Stützvorrichtung nach einem der Ansprüche 1 bis 8, **dadurch gekennzeichnet, dass** die Sicherung (44) aus Metall, insbesondere aus Stahl bzw. Edelstahl besteht.

10. Stützvorrichtung nach einem der Ansprüche 7 bis 9, **dadurch gekennzeichnet, dass** die Verbindungsmittel (40) mehrere über den Umfang des Sicherungsrings (44) verteilte Sicherungsschrauben (46) aufweisen, und dass die Sicherungsschrauben (46) durch miteinander fluchtende Durchbrüche (52,60) des Sicherungsrings (44) und des Dichtrings (42) hindurch in Sacklochbohrungen in der Randpartie der Lagerpfanne (32) einschraubbar sind.

11. Stützvorrichtung nach einem der Ansprüche 7 bis 10, **dadurch gekennzeichnet, dass** die Ringsegmente (58) des Sicherungsrings mit ihren gegeneinander anliegenden Enden paarweise jeweils einen Durchbruch (60') für eine Sicherungsschraube gemeinsam begrenzen.

12. Stützvorrichtung nach einem der Ansprüche 1 bis 11, **dadurch gekennzeichnet, dass** die Verbindungsmittel (40) mehrere über den Umfang des Dichtrings (42) verteilte Distanzhülsen zur Aufnahme jeweils einer Sicherungsschraube (46) aufweisen, wobei die Distanzhülsen (62) über einen Bund (64) an der Sicherung (44) abstützt sind und im unverspannten Zustand des Dichtrings (42) in einem vorgegebenen Abstand vom Rand der Lagerpfanne (32) enden.

13. Stützvorrichtung nach einem der Ansprüche 1 bis 12, **dadurch gekennzeichnet, dass** die Lagerpfanne (32) einen kugelkalottenförmigen Abschnitt (32) und einen im Durchmesser größeren Zylinderabschnitt (38) aufweist.

14. Stützvorrichtung nach einem der Ansprüche 1 bis 13, **dadurch gekennzeichnet, dass** der Pendelfuß (22) bis zu einem Grenz-Schwenkwinkel schwenkbeweglich ist, und dass der durch die Sicherung (44) vorgespannte elastomere Dichtring (42) die Gelenkstelle im Grenzbereich des Schwenkwinkels vor Beschädigung schützt.

15. Mobiles Arbeitsgerät, insbesondere Autobetonpumpe (10), mit einem Fahrgestell (12) und mindestens einer an dem Fahrgestell (12) vorzugsweise an einem Ausleger (16) angeordneten Stützvorrichtung (18) nach einem der vorhergehenden Ansprüche.

## Claims

1. Supporting device for a mobile working appliance, in particular a truck-mounted concrete pump (10), comprising a supporting leg (20), which is preferably provided with a telescopic member (26), and a swing foot (22) which is pivotable to a limited degree on all sides at a lower articulation point of the supporting leg (20) and which can be supported on the ground (24), wherein the articulation point has a bearing socket (32) and a ball head (30) secured by connection means (40) in the bearing socket (32), **characterized in that** the connection means (40) comprise an elastomer sealing ring (42), which engages around the ball head (30) in a sealing manner, and a securing means (44) which fixes the sealing ring (42) on the edge of the bearing socket (32) and clamps it against the ball head (30).

2. Supporting device according to Claim 1, **characterized in that** the sealing ring (42) can be drawn with elastic widening over a free half-ball of the ball head (30) and can be clamped on in the region of a small circle of the ball head (30).

3. Supporting device according to Claim 1 or 2, **characterized in that** the sealing ring (42) has a contour curved in the form of a ball zone at its sealing surface (56) bearing against the ball head (30).

4. Supporting device according to one of Claims 1 to 3, **characterized in that** the sealing ring (42) is adapted for a press fit onto the ball head (30), wherein, in the installed position, the sealing ring (42) has a radial undersize with respect to the ball head (30).

5. Supporting device according to one of Claims 1 to 4, **characterized in that** the sealing ring (42) consists of an elastomer material, preferably PU, with a hardness in the range from 80 to 90 Shore A.

6. Supporting device according to one of Claims 1 to 5, **characterized in that** the sealing ring (42) has a stacked flange region (54) for positively receiving the securing means (44).

7. Supporting device according to one of Claims 1 to 6, **characterized in that** the securing means (44), which takes the form of a securing ring, is composed of rigid ring segments (58) in multipart, in particular two-part, form.

8. Supporting device according to one of Claims 1 to 7, **characterized in that**, in the installed state, the ring-form securing means (44) has a smaller inside diameter than the large circle diameter of the ball head (30).

9. Supporting device according to one of Claims 1 to 8, **characterized in that** the securing means (44) consists of metal, in particular of steel or stainless steel.

10. Supporting device according to one of Claims 7 to 9, **characterized in that** the connection means (40) have a plurality of securing screws (46) distributed over the circumference of the securing ring (44), and **in that** the securing screws (46) can be screwed through mutually aligned openings (52, 60) in the securing ring (44) and the sealing ring (42) into blind-hole bores in the edge portion of the bearing socket (32).

11. Supporting device according to one of Claims 7 to 10, **characterized in that** the ring segments (58) of the securing ring, by way of their ends which bear against one another, in each case jointly delimit in pairs an opening (60') for a securing screw.

12. Supporting device according to one of Claims 1 to 11, **characterized in that** the connection means (40) have a plurality of spacer sleeves distributed over the circumference of the sealing ring (42) and intended for receiving a respective securing screw (46), wherein the spacer sleeves (62) are supported on the securing means (44) via a collar (64) and, in the non-clamped state of the sealing ring (42), end at a predetermined distance from the edge of the bearing socket (32).

13. Supporting device according to one of Claims 1 to 12, **characterized in that** the bearing socket (32) has a spherical-cap-shaped portion (32) and a larger-diameter cylindrical portion (38).

14. Supporting device according to one of Claims 1 to 13, **characterized in that** the swing foot (22) is pivotably movable up to a limiting pivot angle, and **in that** the elastomer sealing ring (42) prestressed by the securing means (44) protects the articulation point in the limiting range of the pivot angle from damage.

15. Mobile working appliance, in particular a truck-mounted concrete pump (10), comprising a chassis (12) and at least one supporting device (18) according to one of the preceding claims that is arranged on the chassis (12), preferably on an outrigger (16).

## Revendications

1. Stabilisateur pour un appareil de travail mobile, en particulier une pompe à béton automotrice (10) avec un pied stabilisateur (20) muni de manière préférée d'un élément télescopique (26) et avec un patin articulé (22) pouvant s'appuyer sur un substrat (24), pivotant, limité dans toutes les directions au niveau d'un emplacement articulé inférieur du pied stabilisateur (20), dans lequel l'emplacement articulé présente une crapaudine (32) et une tête sphérique (30) maintenue dans la crapaudine (32) grâce un moyen de liaison (40), **caractérisé en ce que** le moyen de liaison (40) comprend un anneau d'étanchéité élastomère (42) enserrant de manière étanche la tête sphérique (30) et une protection (44) immobilisant l'anneau d'étanchéité (42) sur le bord de la crapaudine (32) et le comprimant contre la tête sphérique (30).

2. Stabilisateur selon la revendication 1, **caractérisé en ce que** l'anneau d'étanchéité (42) peut être enfilé sur un hémisphère libre de la tête sphérique (30) grâce à un élargissement élastique et peut être monté dans le secteur d'un petit diamètre de la tête sphérique (30).

3. Stabilisateur selon la revendication 1 ou 2, **caractérisé en ce que** l'anneau d'étanchéité (42) présente un profil arqué en forme de zone sphérique au niveau de sa surface d'étanchéité (56) reposant sur la tête sphérique (30).

4. Stabilisateur selon l'une quelconque des revendications 1 à 3, **caractérisé en ce que** l'anneau d'étanchéité (42) est conçu pour un ajustement en compression au niveau de la tête sphérique (30), l'anneau d'étanchéité (42) présentant dans la position d'installation une sous-cote radiale par rapport à la tête sphérique (30).

5. Stabilisateur selon l'une quelconque des revendications 1 à 4, **caractérisé en ce que** l'anneau d'étanchéité (42) est constitué d'un matériau élastomère, de préférence du PU avec une dureté dans la plage de 80 à 90 dans l'échelle shore-A.

6. Stabilisateur selon l'une quelconque des revendications 1 à 5, **caractérisé en ce que** l'anneau d'étanchéité (42) présente un secteur de bride (54) étagé destiné à accueillir avec complémentarité de forme la protection (44).

7. Stabilisateur selon l'une quelconque des revendications 1 à 6, **caractérisé en ce que** la protection (44) réalisée en tant que rondelle de sûreté est composée de plusieurs parties, en particulier deux parties, à partir de segments annulaires (58) rigides.

8. Stabilisateur selon l'une quelconque des revendications 1 à 7, **caractérisé en ce que** la protection annulaire (44) possède dans un état d'installation un diamètre intérieur plus petit que le diamètre de grand cercle de la tête sphérique (30).

9. Stabilisateur selon l'une quelconque des revendications 1 à 8, **caractérisé en ce que** la protection (44) est constituée de métal, en particulier d'acier resp. d'acier inoxydable.

10. Stabilisateur selon l'une quelconque des revendications 7 à 9, **caractérisé en ce que** le moyen de liaison (40) présente plusieurs vis de retenue (46) réparties sur la périphérie de la rondelle de sûreté (44), et les vis de retenue (46) peuvent être vissées dans des alésages à trou borgne de la partie bord de la crapaudine (32) à travers des percements (52, 60), alignés les uns avec les autres, de la rondelle de sûreté (44) et de l'anneau d'étanchéité (42).

11. Stabilisateur selon l'une quelconque des revendications 7 à 10, **caractérisé en ce que** les extrémités juxtaposées des segments annulaires (58) de la rondelle de sûreté délimitent ensemble, par paire, respectivement un percement (60') pour une vis de retenue.

12. Stabilisateur selon l'une quelconque des revendications 1 à 11, **caractérisé en ce que** le moyen de liaison (40) présente plusieurs douilles d'écartement réparties sur la périphérie de l'anneau d'étanchéité (42) afin d'accueillir respectivement une vis de retenue (46), dans lequel les douilles d'écartement (62) s'appuient sur la protection (44) par l'intermédiaire d'une bride (64) et, dans un état non comprimé de l'anneau d'étanchéité (42), adoptent un espacement prédéfini par rapport au bord de la crapaudine (32).

13. Stabilisateur selon l'une quelconque des revendications 1 à 12, **caractérisé en ce que** la crapaudine (32) présente une section en forme de calotte sphérique (32) et une section cylindrique (38) de diamètre supérieur.

14. Stabilisateur selon l'une quelconque des revendications 1 à 13, **caractérisé en ce que** le patin articulé (22) peut être pivoté jusqu'à un angle de pivotement limite, et l'anneau d'étanchéité élastomère (42) comprimé par la protection (44) protège l'emplacement articulé d'un éventuel dommage dans le secteur limite de l'angle de pivotement.

15. Appareil de travail mobile, en particulier pompe à béton automotrice (10), avec un châssis (12) et au moins un stabilisateur (18) selon l'une quelconque des revendications précédentes agencé de manière préférée au niveau d'une flèche (16) sur ledit châssis (12).
